Europäisches Patentamt

European Patent Office

Office européen des brevets

(11) Publication number: **0 044 625**
**B1**

# EUROPEAN PATENT SPECIFICATION

(45) Date of publication of patent specification: **03.04.85**

(21) Application number: **81302832.1**

(22) Date of filing: **23.06.81**

(51) Int. Cl.⁴: **B 60 M 1/20**

(54) Lambda type suspension system for an overhead contact wire.

(30) Priority: **01.07.80 JP 88547/80**

(43) Date of publication of application:
**27.01.82 Bulletin 82/04**

(45) Publication of the grant of the patent:
**03.04.85 Bulletin 85/14**

(84) Designated Contracting States:
**FR GB**

(56) References cited:
**DE-C- 893 503**
**FR-A- 378 565**
**GB-A-1 246 165**

(73) Proprietor: **JAPANESE NATIONAL RAILWAY**
**1-6-5 Marunouchi Chiyoda-ku**
**Tokyo (JP)**

(73) Proprietor: **SANWA TEKKI CORPORATION**
**6-5-19 Minami Shinagawa Shinagawa-ku**
**Tokyo (JP)**

(72) Inventor: **Oda, Osamu**
**1-1-22 Kanamori Machida-city**
**Tokyo (JP)**
Inventor: **Noda, Hiroji**
**1-23-24 Nishi Shinagawa Shinagawa-ku**
**Tokyo (JP)**
Inventor: **Iwase, Masaru**
**2426-7, Kosugeyacho Totsuka-ku**
**Yokohama-city Kanagawa (JP)**
Inventor: **Ishii, Yoshio**
**2-1-5 Kitazawa Setagaya-ku**
**Tokyo (JP)**

(74) Representative: **Warden, John Christopher et al**
**R.G.C. Jenkins & Co. 12-15, Fetter Lane**
**London EC4A 1PL (GB)**

Courier Press, Leamington Spa, England.

**Description**

The present invention relates to a lambda-type direct suspending overhead contact system for an electric railway which is relatively inexpensive.

Recently, aluminum wires having a steel tape core have been tested and used instead of the conventional copper contact wires. This type of contact wire is made by encapsulation of a steel tape in aluminum and is referred to herein as steel-aluminum contact wire. The steel-aluminum contact wire can be suspended under high tension whereby it is possible to suspend it by a lambda-type suspension system without using a messenger wire.

The lambda-type suspension wire has anchor ears at both ends to hold a contact wire for a railway or the like. The center of the suspension wire is held in lambda form by an insulator fitting connected to a fixed beam. It is however, indispensable to bend the different catenaries formed at both sides of the anchor ear. The bent part of the catenaries of the contact wire causes trouble for high speed running of a car.

The present invention provides a lambda-type suspension system for an overhead contact wire for an electric railway wherein the contact wire is anchored to a fixed support by suspension wires connecting the fixed support to pairs of inner and outer anchor ears secured to the contact wire on each side of the fixed support, the outer ears being further from said support than the inner ears, characterized in that the inner and outer ears of each pair are connected respectively by inner and outer sub-suspension wires to an eccentric yoke which in turn is connected to the fixed support by a main suspension wire, the main suspension wire being pivotally connected to the yoke at a position which is closer to the position at which the outer sub-suspension wire is connected to the yoke than to the position at which the inner sub-suspension wire is connected to the yoke, whereby the ratio of the tension in the outer wire to that in the inner wire is in a range from 2.0:1 to 3.5:1.

It is possible in this way to provide smooth catenaries of a contact wire on both sides of each anchor ear so as to allow high speed running of a car.

Preferred embodiments of the invention will now be described with reference to the accompanying drawings wherein:

Figure 1 is a front view of an anchor ear;

Figure 2 is a side view of the anchor ear;

Figure 3 is a front view of a lambda-type direct suspension overhead contact system of a generally known configuration.

Figure 4 is a partial front view of a lambda-type direct suspension overhead contact system of the present invention; and

Figure 5 is a schematic view of the suspending overhead contact system for calculation of tensile forces.

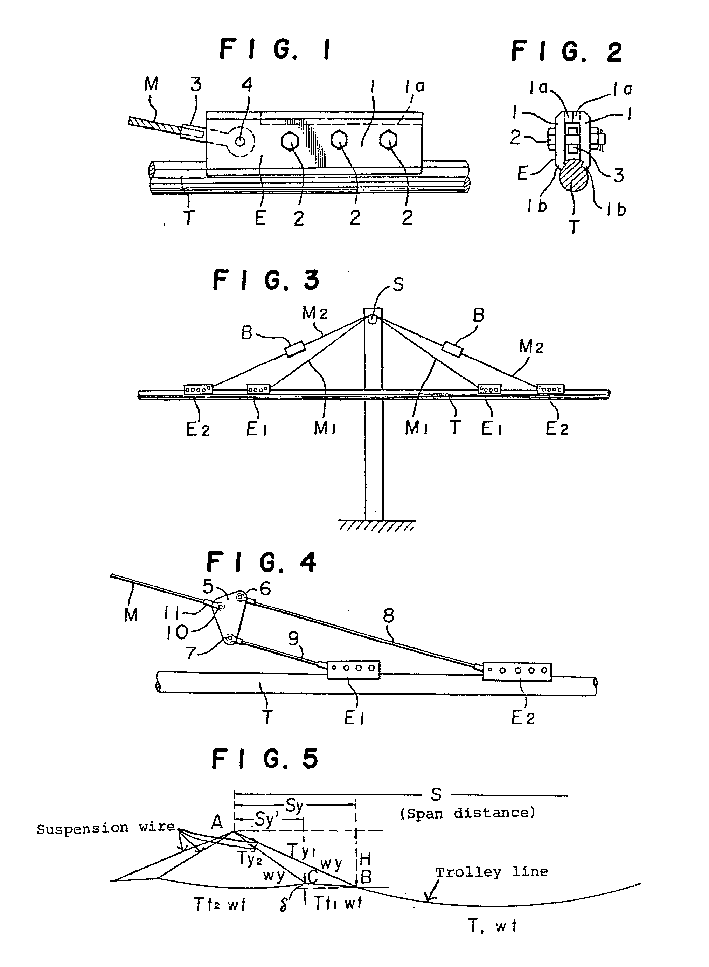

Referring first to Figures 1 and 2, an anchor ear E is formed by a pair of slender ear plates (1). Each ear plate has a butt contact edge (1a) at the upper side and a clamp tooth (1b) for clamping a contact wire at the lower side and throughholes for fastening bolts (2) at central part and a throughhole for a cotter bolt (4) at one end in the longitudinal direction. A connecting fitting (3) is pivotally fitted to the cotter bolt (4) and the other end of the connecting fitting (3) is fixed to the suspension wire M.

Figure 3 shows a lambda-type suspension system of generally known configuration disclosed for example in FR—A—378565. In this arrangement, inner and outer suspension wires $M_1$ and $M_2$ are used, the anchor ears $E_1$, $E_1$ being connected to both sides of the inner suspension wire and the anchor ears $E_2$, $E_2$ being connected to both sides of the outer suspension wire. The contact wire T is clamped by the anchor ears $E_1$, $E_1$, $E_2$, $E_2$ and the inner and outer suspension wires are held at the center by an insulating fitting S held on a fixed support or beam.

If the tension applied to the inner and outer suspension wires $M_1$ and $M_2$ are equal, the tension applied to the contact wire inside the anchor ears $E_2$, $E_2$ is lowered by the tension of the inner suspension wire $M_1$ and therefore lower than the tension of the contact wire outside the anchor ears $E_2$, $E_2$. Therefore, the positions of the anchor ears $E_1$, $E_1$ connected to the inner suspension wire $M_1$ are pulled up to bend the contact wire at the positions of the anchor ears $E_1$, $E_1$ whereby the smoothing of the contact wire is not attained.

The positions for clamping the contact wire T by the anchor ears are selected to give a ratio of tension in the inner suspension wire $M_1$ to that in the outer suspension wire $M_2$ of 1:2.0 to 3.5 and the tension is adjusted by turnbuckles B connected in the outer suspension wires $M_2$. If the tensions of the inner and outer suspension wires are adjusted to said ratio, the bending of the contact wire T caused by the anchor ears is distributed to result in the smoothing of the contact wire.

The ratio of the tensions of the inner and outer suspension wires $M_1$, $M_2$ for smoothing the contact wire T can be easily calculated depending upon unit weights of the contact wire T, the tensions for suspension and the heights of the suspension wire from the contact wire.

Figure 4 shows the configuration of the present invention. Two sub-suspension wires (8), (9) are respectively connected to pins (6), (7) fitted on both ends of a yoke (5). Each anchor ear $E_1$ or $E_2$ is pivotally connected to a respective connecting fitting fixed to each of the outer and inner suspension wires (8, (9). A pin (10) is fitted at the other end of the yoke (5) at a suitable position offset towards the pin (6) to form triangle points (6), (7), (10). One end of the main suspension wire M is fixed to a connecting fitting (11)

2

which is pivotally connected to the pin (10). Each anchor ear $E_1$, $E_2$ is connected to the other end of the sub-suspension wire (8), (9) and the contact wire T is held by the anchor ears $E_1$ and $E_2$ at desired positions with a desired space.

The main suspension wire M is held on the support S. The tension of the outer suspension wire (8) is adjusted to 2.0 to 3.5 times the tension of the inner suspension wire (9) by selecting the position of the pin (10). This is attained by holding only the main suspension wire M on the supporting clamp S on the fixed beam.

In accordance with the present invention, the contact wire can be smoothly suspended near the anchor ears so as to be durable to high speed running of a car.

Referring to Figure 5, the ratio of the tensions of the inner and outer suspension wires will be further illustrated.

Although Figure 5 shows the known configuration of Figure 3 it will be understood that the same equations can be applied to the configuration of the invention shown in Figure 4.

In order to result in smoothing of the contact wire T by suspending it at the positions, C, B by the anchor ears connected to the suspension wires which are held at the point A, a suitable ratio of the tensions of the inner and outer suspension wires $T_{y1}$, $T_{y2}$ is given by the equations:

$$H = \dfrac{\dfrac{T_{t1}}{Sy-Sy'}\left[wy\ \dfrac{Sy+Sy'}{2}+wt\ \dfrac{S}{2}\right]+\dfrac{T_{y2}}{Sy'}\left[wy\ \dfrac{Sy}{2}+wt\ \dfrac{S-Sy-Sy'}{2}\right]}{\dfrac{T_{t1}}{Sy-Sy'}\left[\dfrac{T_{y1}}{Sy}+\dfrac{T_{y2}}{Sy'}\right]+\dfrac{T_{y1}\ T_{y2}}{Sy\ Sy'}}$$

$$\delta = H - \dfrac{\dfrac{T_{t1}}{Sy-Sy'}\left[wy\ \dfrac{Sy+Sy'}{2}+wt\ \dfrac{S}{2}\right]+\dfrac{T_{y1}}{Sy}\left[wy\ \dfrac{Sy'}{2}+wt\ \dfrac{Sy+Sy'}{2}\right]}{\dfrac{T_{t1}}{Sy-Sy'}\left[\dfrac{T_{y1}}{Sy}+\dfrac{T_{y2}}{Sy'}\right]+\dfrac{T_{y1}\ T_{y2}}{Sy\ Sy'}}$$

wherein:

H designates the vertical distance between said fixed supports and said outer pair of anchor ears $(E_2)$;

$\delta$ designates the vertical distance between said outer pair of anchor ears $(E_2)$ and said inner pair of anchor ears $(E_1)$;

Sy designates the horizontal distance between said fixed supports and one of said outer pair of anchor ears $(E_2)$;

Sy' designates the horizontal distance between fixed supports and one of said inner pair of anchor ears $(E_1)$;

S designates the span distance;

T designates the tensile forces applied to the contact wire between the outer ears $(E_2)$ and the next adjacent suspension system;

$T_{t1}$ designates the tensile force applied to the contact wire between the inner and outer ears;

$T_{t2}$ designates the tensile force applied to the contact wire between the inner ears;

$T_{y1}$ and $T_{y2}$ designates the tensile forces applied to the outer and inner sub-suspension wires respectively;

wt designates the unit weight of the contact wire; and

wy designates the unit weight of the suspension wires;

whereby said contact wire is supported so as to be substantially straight.

The distance Sy is usually in a range of 2 to 8 m preferably 3 to 5 m. The distance between the positions of the outer anchor ear and the inner anchor ear is preferably in a range of 1/2 Sy $(1\pm0.3)$.

When $T_{y1}$ is given, the tension $T_{y2}$ required to give $\delta$ for equal bending angles of the contact wire at B point and C point can be derived from the equations (1), (2).

The ratio of $T_{y1}$ to $T_{y2}$ is in a range of 2.0:1 to 3.5:1.

Example:
The embodiment shown in Figure 4 is applied for a trolley line.

| | | |
|---|---|---|
| A. Trolley line: TA 150 | Tension: | 1000 kgf (9800 N) |
| Lambda type suspension fitting | Tension: | 250 kgf (2450 N) |
| Distance between suspending points: | | 50 m |
| Distance between trolley line and suspending point: | | 325 mm |

Applicable speed:
under 120 km/hr (single anchor)
under 160 km/hr (double anchor)

Operative life:
4 times as much of GT trolley line

| | | |
|---|---|---|
| B. Trolley line: TA 150 | Tension: | 1500 kgf (14700 N) |
| Lambda type suspension fittings: | Tension: | 300 kgf (2940 N) |
| Distance between suspending points: | | 63 m |
| Distance between trolley line and suspending point: | | 335 m |

Applicable speed:
under 120 km/hr (single anchor)
under 160 km/hr (double anchor)

The lambda type suspension unit include the main suspension wire M, the outer and inner suspension wires (8), (9); the anchor ears $E_1$, $E_2$ and the yoke (5) comprising pins (6), (7), (10). The suspension unit is pre-assembled in one unit having an overall length of approximately 8 m and to facilitate the transit of this unit. This unit can be folded in four thus having a length of only 2 m. For installation of this unit, the unit is extended to its full length and is fitted to the trolley line by fixing the anchor ears at both ends and the suspension wire is connected to a suspension clamp at the center to a hook of a bracket.

**Claims**

1. A lambda-type suspension system for an overhead contact wire for an electric railway wherein the contact wire (T) is anchored to a fixed support (S) by suspension wires connecting the fixed support to pairs of inner and outer anchor ears ($E_1$, $E_2$) secured to the contact wire on each side of the fixed support, the outer ears ($E_2$) being further from said support than the inner ears ($E_1$), characterized in that the inner and outer ears ($E_1$, $E_2$) of each pair are connected respectively by inner and outer sub-suspension wires (9, 8) to an eccentric yoke (5) which in turn is connected to the fixed support (S) by a main suspension wire (M), the main suspension wire being pivotally connected to the yoke (5) at a position (10) which is closer to the position (6) at which the outer sub-suspension wire (8) is connected to the yoke than to the position (7) at which the inner sub-suspension wire (9) is connected to the yoke, whereby the ratio of the tension in the outer wire (8) to that in the inner wire (9) is in a range from 2.0:1 to 3.5:1.

2. A lambda-type direct suspension system according to Claim 1 wherein said outer and inner sub-suspension wires (9, 8) suspend a contact wire under the tensions given by the equations:

$$H=\frac{\dfrac{T_{t1}}{Sy-Sy'}\left[wy\,\dfrac{Sy+Sy'}{2}+wt\,\dfrac{S}{2}\right]+\dfrac{T_{y2}}{Sy'}\left[wy\,\dfrac{Sy}{2}+wt\,\dfrac{S-Sy-Sy'}{2}\right]}{\dfrac{T_{t1}}{Sy-Sy'}\left[\dfrac{T_{y1}}{Sy}+\dfrac{T_{y2}}{Sy'}\right]+\dfrac{T_{y1}\,T_{y2}}{Sy\,Sy'}}$$

4

$$\delta = H - \cfrac{\dfrac{T_{t1}}{Sy-Sy'}\left[wy\,\dfrac{Sy+Sy'}{2}+wt\,\dfrac{S}{2}\right]+\dfrac{T_{y1}}{Sy}\left[wy\,\dfrac{Sy'}{2}+wt\,\dfrac{Sy+Sy'}{2}\right]}{\dfrac{T_{t1}}{Sy-Sy'}\left[\dfrac{T_{y1}}{Sy}+\dfrac{T_{y2}}{Sy'}\right]+\dfrac{T_{y1}\,T_{y2}}{Sy\,Sy'}}$$

wherein:

H designates the vertical distance between said fixed supports and said outer pair of anchor ears ($E_2$);

$\delta$ designates the vertical distance between said outer pair of anchor ears ($E_2$) and said inner pair of anchor ears ($E_1$);

Sy designates the horizontal distance between said fixed supports and one of said outer pair of anchor ears ($E_2$);

Sy' designates the horizontal distance between fixed supports and one of said inner pair of anchor ears ($E_1$);

S designates the span distance;

T designates the tensile forces applied to the contact wire between the outer ears ($E_2$) and the next adjacent suspension system;

$T_{t1}$ designates the tensile force applied to the contact wire between the inner and outer ears;

$T_{t2}$ designates the tensile force applied to the contact wire between the inner ears;

$T_{y1}$ and $T_{y2}$ designates the tensile forces applied to the outer and inner sub-suspension wires respectively;

wt designates the unit weight of the contact wire; and

wy designates the unit weight of the suspension wires;

whereby said contact wire is supported so as to be substantially straight.

3. The lambda-type direct suspending overhead contact system according to Claim 1 wherein said contact wire is an aluminum wire having a steel tape core.

**Patentansprüche**

1. Lambda-Aufhängevorrichtung für einen Hochfahrdraht einer elektrischen Eisenbahn, bei der Fahrdraht (T) durch Aufhängedrähte an einem Festlager (S) geankert ist, die das Festlager mit Paaren innerer und äußerer Aufhängestücke ($E_1$, $E_2$) verbinden, die auf jeder Seite des Festlagers an dem Fahrdraht befestigt sind, wobei die äußeren Aufhängestücke ($E_2$) weiter als die inneren Aufhängestücke ($E_1$) vom Festlager entfernt sind, dadurch gekennzeichnet, daß die inneren und äußeren Aufhängestücke ($E_1$, $E_2$) jedes Paares jeweils durch innere und äußer Nebenaufhängedrähte (9, 8) mit einem Exzenterbügel (5) verbunden sind, der seinerseits mit dem Festlager (S) über einen Hauptaufhängedraht (M) verbunden ist, wobei der Hauptaufhängedraht drehbar mit dem Bügel (5) in einer Stellung (10) verbunden ist, die näher zur Stellung (6) liegt, in der der äußere Nenenaufhängedraht (8) mit dem Bügel verbunden ist als zu der Stellung (7), in der der innere Nebenaufhängedraht (9) mit dem Bügel verbunden ist, wobei das Spannungsverhältnis zwischen äußerem Draht (8) und innerem Draht (9) in einem Bereich von 2,0:1 bis 3,5:1 liegt.

2. Lambda-Direktaufhängevorrichtung nach Anspruch 1, bei der äußere und innere Nebenaufhängedrähte (9, 8) einen Fahrdraht bei durch die folgenden Gleichungen gegebenen Spannungen tragen:

$$H = \cfrac{\dfrac{T_{t1}}{Sy-Sy'}\left[wy\,\dfrac{Sy+Sy'}{2}+wt\,\dfrac{S}{2}\right]+\dfrac{T_{y2}}{Sy'}\left[wy\,\dfrac{Sy}{2}+wt\,\dfrac{S-Sy-Sy'}{2}\right]}{\dfrac{T_{t1}}{Sy-Sy'}\left[\dfrac{T_{y1}}{Sy}+\dfrac{T_{y2}}{Sy'}\right]+\dfrac{T_{y1}\,T_{y2}}{Sy\,Sy'}}$$

$$\delta = H - \cfrac{\dfrac{T_{t1}}{Sy-Sy'}\left[wy\,\dfrac{Sy+Sy'}{2}+wt\,\dfrac{S}{2}\right]+\dfrac{T_{y1}}{Sy}\left[wy\,\dfrac{Sy'}{2}+wt\,\dfrac{Sy+Sy'}{2}\right]}{\dfrac{T_{t1}}{Sy-Sy'}\left[\dfrac{T_{y1}}{Sy}+\dfrac{T_{y2}}{Sy'}\right]+\dfrac{T_{y1}\,T_{y2}}{Sy\,Sy'}}$$

wobei:

H dem Vertikalabstand zwischen dem Festlager (S) und dem äußeren Paar der Aufhängestücke ($E_2$) entspricht;

δ dem Vertikalabstand zwischen dem äußeren Paar der Aufhängestücke ($E_2$) un dem inneren Paar der Aufhängestücke ($E_1$) entspricht;

Sy dem Horizontalabstand zwischen dem Festlager (S) und einem der zwei äußeren Aufhängestücke ($E_2$) entspricht;

Sy' dem Horizontalabstand zwischen dem Festlager (S) und einem der zwei inneren Aufhängestücke ($E_1$) entspricht;

S der Spannweite entspricht;

T der Spannungskräftebeaufschlagung des Fahrdrahts zwischen den äußeren Aufhängestücken ($E_2$) und der nächstbenachbarten Aufhängevorrichtung entspricht;

$T_{t1}$ der Spannungskräftebeaufschlagung des Fahrdrahts zwischen den inneren und äußeren Aufhängestücken entspricht;

$D_{t2}$ der Spannungskräftbeaufschlagung des Fahrdrahts zwischen den inneren Aufhängestücken entspricht;

$D_{Y1}$ und $D_{y2}$ der Spannungskräftebeaufschlagung der äußeren bzw. inneren Nebenaufhängedrähte entspricht;

wt dem Längengewicht des Fahrdrahts enspricht; und

wy dem Längegewicht der Aufhängedrähte entspricht,

wodurch der Fahrdraht derart gehalten wird, daß er ungefähr gerade ist.

3. Lambda-Direktaufhängevorrichtung zur Hochfahrdraht nach Anspruch 1, bei der der Fahrdraht ein Aluminiumdraht mit einem Stahlbandkern ist.

## Revendications

1. Suspension de type lambda pour fil de contact aérien d'un chemin de fer électrique, dans laquelle le fil de contact (T) est amarré à un support fixe (S) par des câbles de suspension reliant le support fixe à des paires de crochets amarrés intérieurs et extérieurs ($E_1$, $E_2$) qui sont fixés au fil de contact de chaque côté du support fixe, les crochets amarrés extérieurs ($E_2$) étant plus éloignés dudit support que les crochets amarrés intérieurs ($E_1$), caractérisée en ce que les crochets amarrés intérieur et extérieur ($E_1$, $E_2$) de chaque paire sont reliés respectivement, par des câbles de sous-suspension intérieur et extérieur (9, 8) à un étrier excentrique (5) qui est lui-méme relié au support fixe (S) par un câble de suspension principal (M), ce câble de suspension principal étant monté pivotant sur l'étrier (5) en un point (10) qui est plus proche du point (6) où le câble de sous-suspension extérieur (8) se raccorde à l'étrier, que du point (7) où le câble de sous-suspension intérieur (9) se raccorde à l'étrier, de telle sorte que le rapport entre la tension exercée dans le câble extérieur (8) et la traction exercée dans le câble intérieur (9) se situe dans l'intervalle de 2,0/1 à 3,5/1.

2. Suspension directe de type lambda selon la revendication 1, dans laquelle lesdits câbles de sous-suspension extérieur et intérieur (9, 8) suspendent un fil de contact sous les tensions mécaniques données par les équations:

$$H = \cfrac{\dfrac{T_{t1}}{Sy-Sy'}\left[wy\dfrac{Sy+Sy'}{2}+wt\dfrac{S}{2}\right]+\dfrac{T_{y2}}{Sy'}\left[wy\dfrac{Sy}{2}+wt\dfrac{S-Sy-Sy'}{2}\right]}{\dfrac{T_{t1}}{Sy-Sy'}\left[\dfrac{T_{y1}}{Sy}+\dfrac{T_{y2}}{Sy'}\right]+\dfrac{T_{y1}\,T_{y2}}{Sy\,Sy'}}$$

$$\delta = H - \cfrac{\dfrac{T_{t1}}{Sy-Sy'}\left[wy\dfrac{Sy+Sy'}{2}+wt\dfrac{S}{2}\right]+\dfrac{T_{y1}}{Sy}\left[wy\dfrac{Sy'}{2}+wt\dfrac{Sy+Sy'}{2}\right]}{\dfrac{T_{t1}}{Sy-Sy'}\left[\dfrac{T_{y1}}{Sy}+\dfrac{T_{y2}}{Sy'}\right]+\dfrac{T_{y1}\,T_{y2}}{Sy\,Sy'}}$$

dans lesquelles:

H désigne la distance verticale entre ledit support fixe et les crochets amarrés extérieurs ($E_2$) de ladite paire extérieure;

δ désigne la distance verticale entre les crochets amarrés ($E_2$) de ladite paire extérieure et les crochets amarrés ($E_1$) de ladite paire intérieure;

6

Sy désigne la distance horizontale entre ledit support fixe et l'un des crochets amarrés (E₂) de ladite paire extérieure;

Sy' désigne la distance horizontale entre le support fixe et l'un des crochets amarrés (E₁) de ladite paire intérieure;

S désigne la distance entre deux supports fixes;

T désigne les forces de traction qui s'exercent sur le fil de contact entre les crochets amarrés extérieurs (E₂) et la suspension immédiatement adjacent;

T$_{t1}$ désigne la force de traction qui s'exerce sur le fil de contact entre les crochets amarrés intérieur et extérieur;

T$_{t2}$ désigne la force de traction qui s'exerce sur le fil de contact entre les crochets amarrés intérieurs;

T$_{y1}$ et T$_{y2}$ désignent respectivement les forces de traction exercées sur les câbles de sous-suspension extérieur et intérieur;

wt désigne le poids unitaire du fil de contact; et

wy désigne le poids unitaire des câbles de suspension;

de telle sorte que ledit fil de contact est supporté de manière à être sensiblement rectiligne.

3. Suspension directe de type lambda pour un fil de contact aérien selon la revendication 1, dans laquelle ledit fil de contact est un câble d'aluminium dont le noyau est constitué par une bande d'acier.

# F I G. I

# F I G. 2

# F I G. 3

# F I G. 4

# F I G. 5

Suspension wire

(Span distance)

Trolley line